# EUROPÄISCHE PATENTSCHRIFT

(11) **EP 2 604 471 B1**
(45) Veröffentlichungstag und Bekanntmachung des Hinweises auf die Patenterteilung: **14.01.2015**
(21) Anmeldenummer: 12007836.5
(22) Anmeldetag: 21.11.2012
(51) Int. Cl.: B60N 2/46

(54) **Neigungsverstellbare Armlehne**
Armrest with adjustable angle
Accoudoir à inclinaison réglable

(30) Priorität: 16.12.2011 DE 102011121457
(43) Veröffentlichungstag der Anmeldung: 19.06.2013
(73) Patentinhaber: KDK Automotive GmbH, 63607 Wächtersbach (DE)
(72) Erfinder: Fischer, Wolfgang, 58791 Werdohl (DE)
(74) Vertreter: Köchling, Conrad-Joachim

(56) Entgegenhaltungen:
- WO-A1-2006/115343
- WO-A1-2010/020899
- DE-U1- 20 004 157

## Beschreibung

Die Erfindung betrifft eine neigungsverstellbare Armlehne, insbesondere für Kraftfahrzeuge, bestehend aus einer gestellfest anzuordnenden Stütze, einem an der Stütze drehbar gelagerten Träger, der die Armlehne bildet oder an dem die Armlehne befestigt ist, einer Einrichtung zur Einstellung der Neigung des Trägers in eine abgeschwenkte Grundstellung, in eine hochgeschwenkte Nichtgebrauchslage, sowie stufenlos in Zwischengebrauchslagen zwischen der abgeschwenkten Grundstellung und dieser gegenüber hochgeschwenkten Zwischen-Stützstellungen, wobei der Träger in der Grundstellung und in den Zwischengebrauchslagen gegen Abschwenken blockiert ist und in der Nichtgebrauchslage zum Abschwenken bis in die Grundstellung freigegeben ist.

Zum Stand der Technik gehoren bspw. die DE 200 04 157 U1 und die WO 2006/115 343.

Derartige Armlehnen sind im Stand der Technik bekannt. Beispielsweise wird hierzu auf die WO 2010/020899 A 1 verwiesen. Derartige Konstruktionen sind zwar funktionstüchtig, jedoch sind sie relativ teuer in der Herstellung und aufwendig im Aufbau, wobei der Aufbau zudem relativ großvolumig ist. Die bekannten Ausführungsformen weisen zudem teilweise außenliegende Zahnräder und Klinkengesperre auf.

Ausgehend von diesem Stand der Technik liegt der Erfindung die Aufgabe zugrunde, eine alternative Ausführungsform einer neigungsverstellbaren Armlehne zu schaffen, die insgesamt kostengünstig herstellbar ist, die eine kompakte Bauform zur Verfügung stellt und die kompakte und verdeckte Funktionsbauteile beinhaltet.

Zur Lösung dieser Aufgabe schlägt die Erfindung vor, dass die Einrichtung zur Neigungseinstellung aus einer mit ihren Enden an der Stütze befestigten Achse mit zwei Konen besteht, deren kleinster Durchmesser zu den Enden der Achse und deren größter Durchmesser zur Mitte der Achse positioniert ist, ferner aus zwei mit passender Konusinnenmantelfläche jeweils auf die Konen aufgeschobenen Zahnkränzen mit außenliegender Verzahnung nach Art eines Rechts- beziehungsweise Linksgewindes, einer die Zahnkränze übergreifenden Hülse mit zu den Zahnkränzen passender, innenliegender Verzahnung nach Art eines Rechts- beziehungsweise Linksgewindes, wobei der Träger drehfest mit der Hülse oder dem Hülsenmantel verbunden ist, sowie einer Steuereinrichtung zur Steuerung der Verschiebe-Dreh-Bewegung der Zahnkränze in Abhängigkeit von der Schwenkbewegung und/oder der Position des Trägers, wobei die Steuereinrichtung aus Funktionsteilen besteht, die jeweils auf den Enden der Achse zwischen den Enden der Zahnkränze und der Stütze angeordnet sind.

Gemäß dieser Ausgestaltung ist eine mit ihren Enden an Bestandteilen der Stütze befestigte Achse vorgesehen, die über ihren Verlauf zwei Konen aufweist. Die Konen sind so ausgerichtet, dass ihre kleinen Durchmesser zu den Enden der Achse gerichtet sind und ihre größten Durchmesser zur Mitte der Achse positioniert sind. Im Mittelbereich der Achse sind die Konen voneinander beabstandet. Auf der Achse ist im Bereich dieser Konen die Anordnung von Zahnkränzen vorgesehen, die Innenmantelflächen aufweisen, die passend zu den Konen der Achse ausgebildet sind. Sofern diese Zahnkränze also zur Achsmitte verschoben werden, sitzen sie mit ihren Konusinnenmantelflächen fest auf den Konusflächen der Konen. Sind die Zahnkränze zu den Achsenden verschoben, ist der Reibschluss zwischen den Konusinnenmantelflächen der Zahnkränze und den Konen der Achse aufgehoben. Diese Zahnkränze weisen jeweils eine außenliegende Verzahnung auf, wobei der eine Zahnkranz eine Verzahnung nach Art eines Rechtsgewindes und der andere Zahnkranz eine Verzahnung nach Art eines Linksgewindes aufweist. Die Zahnkränze übergreifend ist die entsprechende Hülse aufgebracht, die innenliegend wiederum eine Verzahnung aufweist und zwar in einem Bereich nach Art eines Rechtsgewindes und in einem benachbarten Bereich nach Art eines Linksgewindes. An dieser Hülse ist der Träger, der die Armlehne und/oder das Armpolster trägt, drehfest fixiert. Sofern der Träger aus einer abgesenkten Grundstellung hochgeschwenkt wird, so werden die Zahnkränze durch die ineinandergreifenden Verzahnungen nach außen bewegt (zu den Enden der Achse), so dass die Hülse gegenüber der Achse freigängig ist. Wird die Stütze aus einer angehobenen Stellung nach unten bewegt, werden die Zahnkränze durch die ineinandergreifenden Verzahnungen von Hülse und Zahnkränzen nach innen bewegt, also zur Achsmitte hin, so dass die Konusflächen klemmend aneinander sitzen. Um die entsprechende Aufschwenkbewegung und Abschwenkbewegung der Stütze zu realisieren, ist zudem eine Steuereinrichtung zur Steuerung der Verschiebe-Dreh-Bewegung der Zahnkränze in Abhängigkeit von der Schwenkbewegung und/oder der Position des Trägers vorgesehen. Diese Steuereinrichtung besteht aus Funktionsteilen, die auf den Enden der Achse zwischen den Enden der Zahnkränze und der Stütze angeordnet sind. Durch diese Steuereinrichtung kann in Abhängigkeit von der Schwenkbewegung der Stütze axial auf die Zahnkränze eingewirkt werden, so dass diese sich in die Losstellung bewegen und in dieser verbleiben können, sofern die Stütze abgeschwenkt werden soll und in der Klemmstellung verbleiben oder nach kurzzeitigen Lösen wieder in die Klemmstellung überführt werden, sofern die Stütze unterschiedliche Neigungspositionen einnehmen soll.

Eine bevorzugte Weiterbildung wird darin gesehen, dass jeder Zahnkranz entgegen der Kraft einer mechanischen Feder auf den zugehörigen Konus aufgeschoben wird oder aufschiebbar ist.

Diese mechanische Feder dient dazu, auf die Zahnkränze jeweils einzuwirken, um eine Kraft auszuüben, mit der die Zahnkränze aus der Klemmstellung auf den Konen der Achse in eine Freigangsstellung gedrückt werden können. Sofern auf die Zahnkränze keine anderen Kräfte einwirken, wird also durch diese Federn erreicht, dass die Zahnkränze freigängig auf den Konen der Achse drehbar bleiben. Nur dann wenn eine äußere Kraft auf die Zahnkränze axial gerichtet einwirkt, und diese zur Achsmitte verschiebt, wird die Klemmposition der Zahnkränze auf den Konen der Achse gewährleistet.

Bevorzugt ist dabei vorgesehen, dass zwischen den einander zugewandten Enden der Zahnkränze eine mechanische Feder eingespannt ist, deren Wirkkraft der Aufschubrichtung der Zahnkränze auf die zugehörigen Konen entgegengerichtet ist.

Durch diese Ausbildung bedarf es lediglich einer mechanischen Feder zur Einwirkung auf beide Zahnkränze. Eine solche Feder ist vorzugsweise als Schraubenfeder ausgebildet.

Eine besonders vorteilhafte Weiterbildung wird darin gesehen, dass die Steuereinrichtung jeweils aus einer drehfest auf das Ende der Achse aufgesteckten Druckscheibe mit in radialer Richtung verschieblichen, gefederten Steuerpins, die an einer der Stützen anliegt, einer mit der Hülse drehfest gekoppelten, axial verschieblich auf der Achse angeordneten Steuerscheibe mit Steuerkurven, in die die Steuerpins eingreifen, sowie einem mechanischen Federmittel besteht, welches zwischen Steuerscheibe und dem Ende des Zahnkranzes vorspannbar angeordnet ist.

Demzufolge besteht die Steuereinrichtung aus Druckscheiben, die auf beiden Enden der Achse drehfest aufgebracht sind und sich nach axial außen an jeweils einer Stütze abstützen. Zwischen diesen Druckscheiben und der Hülse ist jeweils die Steuerscheibe angeordnet, die auf der Welle drehbar angeordnet und auch axial verschiebbar ist. Die Steuerscheibe ist mit geeigneten Mitteln drehfest mit der Hülse gekoppelt, so dass die Steuerscheibe also mit der Hülse dreht, wenn die Hülse durch den Armlehnenträger gedreht wird. Die Steuerscheibe hat Steuerkurven oder Steuernuten, in die Steuerpins eingreifen, die an der Druckscheibe gehalten sind. Die Steuerpins sind derart an der Druckscheibe gehalten, dass sie vorzugsweise in radialer Richtung bewegbar sind, nicht aber in axialer Richtung. Das mechanische Federmittel, welches zwischen Steuerscheibe und dem Ende des Zahnkranzes an beiden Enden der Achse vorgesehen ist, dient dazu, die Drehbewegung des Trägers der Armlehne zu beeinflussen. Sofern das Federmittel durch die Steuereinrichtung nicht beaufschlagt ist, das Federmittel also drucklos ist, können sich die Zahnkränze insbesondere unter der Wirkung der auf diese einwirkenden mechanischen Feder in Stellungen bewegen, in denen die Konusinnenflächen der Zahnkränze nicht reibschlüssig auf den Konen der Achse sitzen, sondern ein Freigang erzeugt ist. Sofern durch die Steuereinrichtung auf das mechanische Federmittel eingewirkt wird, welches zwischen Steuerscheibe und dem Ende des Zahnkranzes sitzt, wird das Federmittel gegen den jeweiligen Zahnkranz vorgespannt und dieser wird in die reibschlüssige Stellung verschoben, in welcher er mit seiner konischen Innenfläche fest auf dem Konus der Achse sitzt, so dass die Schwenkbeweglichkeit des Armlehnenträgers unterbunden ist.

Vorzugsweise ist dabei vorgesehen, dass das Federmittel eine Tellerfeder ist.

Des Weiteren ist bevorzugt vorgesehen, dass die Hülse stirnseitig randoffene Ausnehmungen aufweist, in die passende Fußvorsprünge der Steuerscheibe eingreifen, wobei die axiale Erstreckung der Ausnehmungen groß genug ist, um die axiale Bewegung der Steuerscheibe, resultierend aus dem Zusammenwirken von Steuerpins und Steuerscheibe zwängungsfrei zu ermöglichen.

Hierdurch wird in einfacher Weise die Drehmitnahme der Steuerscheibe bezüglich der Hülse sichergestellt, wobei dennoch die Verschieblichkeit der Steuerscheibe relativ zur Hülse ermöglicht ist.

Eine besonders bevorzugte Weiterbildung wird darin gesehen, dass die Steuerscheibe auf ihrer den Steuerpins zugewandten Fläche Steuerkurven aufweist, in denen die freien Ende der Steuerpins geführt sind, und dass die Steuerpins in einem ersten Abschnitt der Steuerkurven ohne axiale Krafteinwirkung auf die Steuerscheibe geführt sind und in einem zweiten Abschnitt der Steuerkurven derart geführt sind und die Kontaktfläche der Steuerkurve für die freien Enden der Steuerpins derart ausgebildet ist, dass die Steuerscheibe entgegen der Kraft des Federmittels in Richtung von der die Steuerpins aufnehmenden Druckscheibe weg bewegbar ist oder bewegt wird.

Gemäß dieser Ausgestaltung wird erreicht, dass bei Verschwenkung des Trägers der Armlehne aus der abgesenkten Grundstellung in eine angehobene Zwischenstellung (stufenlose Verstellung) die Steuerscheibe entgegen der Kraft des Federmittels von der Druckscheibe weg in Richtung der Hülse bewegt wird, so dass das Federmittel auf den jeweiligen Zahnkranz einwirkt und die Sperrstellung des Zahnkranzes relativ zur Achse einstellt, so dass die Zwischenpositionen insofern gesichert sind, als ein Absenken der Stütze aus diesen unterschiedlichen Stützpositionen nicht ohne weiteres möglich ist. Sofern die Stütze über einen gewissen Winkelgrad nach oben verschwenkt wird, laufen die Steuerpins in den ersten Abschnitt der Steuerkurven ein, in welchem keine axiale Krafteinwirkung auf die Steuerscheibe ausgeübt wird. In diesem Falle ist das Federmittel kraftlos und die entsprechenden Zahnkränze können sich aufgrund der Drehung der Hülse und der die Zahnkränze nach axial außen drängenden Feder in die Losstellung bewegen, so dass der Träger der Armlehne aus der höchsten Position in die unterste Position abschwenkbar ist.

Um diese Funktion sicher durchführen zu können, ist zudem vorgesehen, dass der erste Abschnitt der Steuerkurven Stützflächen für die freien Enden der Steuerpins aufweist, die parallel zur Fläche der Steuerscheibe und quer zur Achse verlaufen, und dass der zweite Abschnitt der Steuerkurven eine Stützfläche aufweist, die über eine Einlaufschräge von einem Bereich des ersten Abschnittes abzweigt, über eine gegenüber den Stützflächen des ersten Abschnitts in Richtung auf die Druckscheibe vorragende Stützfläche weiter verläuft und über eine Stufe in einen Bereich des ersten Abschnitts übergeht.

Ausführungsbeispiele der Erfindung sind in der Zeichnung gezeigt und im Folgenden näher beschrieben. Es zeigt:
- Figur 1: eine isometrische Darstellung einer neigungsverstellbaren Armlehne;
- Figur 2: die Armlehne in Seitenansicht in unterschiedlichen Stellungen;

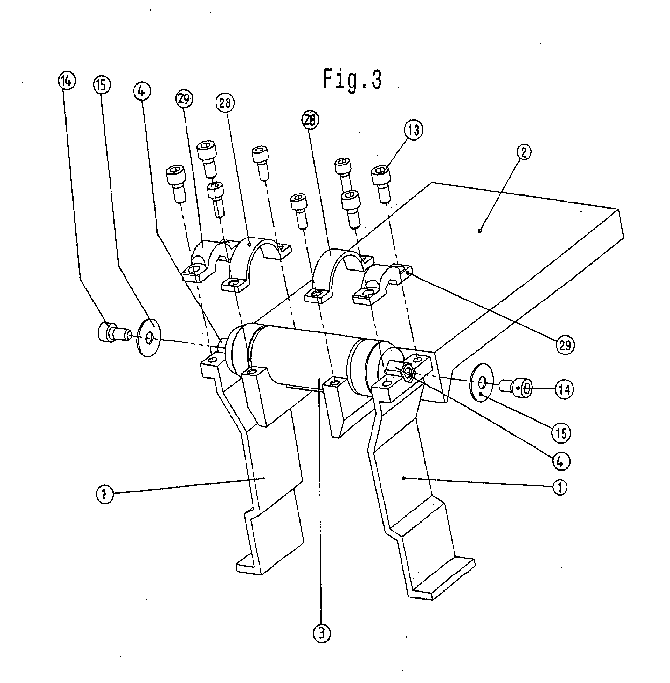

- Figur 3: eine Explosionsdarstellung einer Vormontageansicht der Armlehne;
- Figur 4: die Armlehne in Draufsicht, teilweise aufgebrochen;
- Figur 5: Einzelheiten der Armlehne in Explosionsdarstellung;
- Figur 6: Einzelheiten im Zusammenbau im Schnitt gesehen;
- Figur 7: Einzelheiten in Explosionsdarstellung;
- Figur 8: Einzelheiten im Schnitt gesehen;

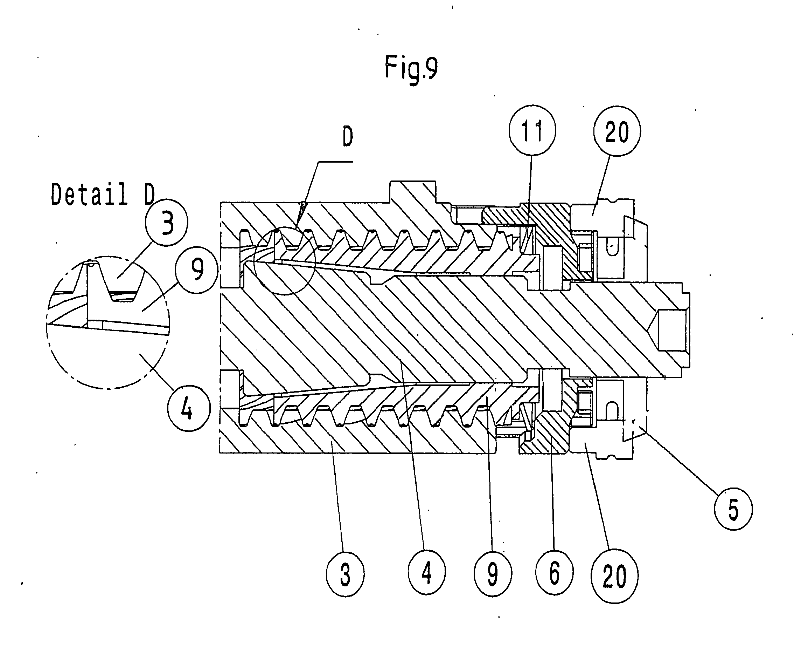

- Figur 9: desgleichen in einer Freigabeposition;

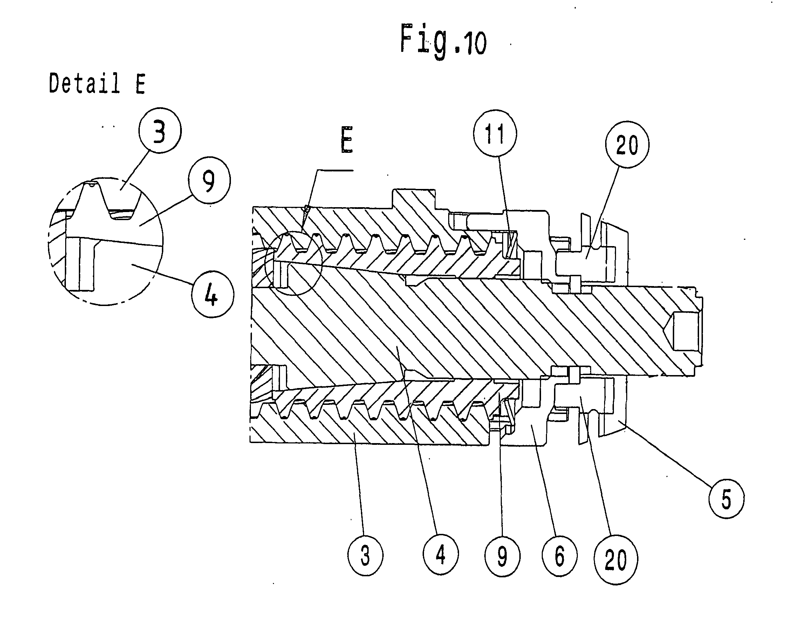

- Figur 10: desgleichen in einer Sperrposition;

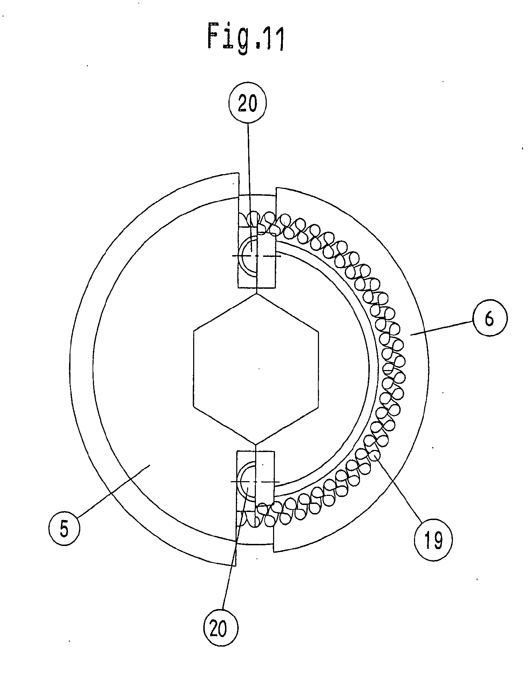

- Figur 11: ein Detail in Stirnansicht, teilweise aufgebrochen;
- Figur 12: ein Detail in Schrägansicht;
- Figur 13: das Detail in Explosionsdarstellung;
- Figur 14: ein weiteres Detail in Stirnansicht.

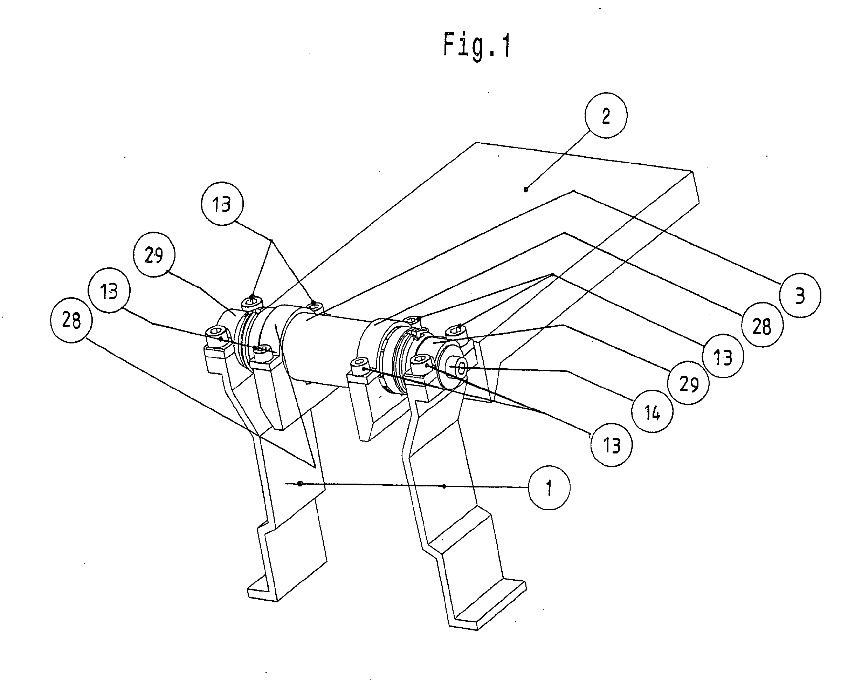

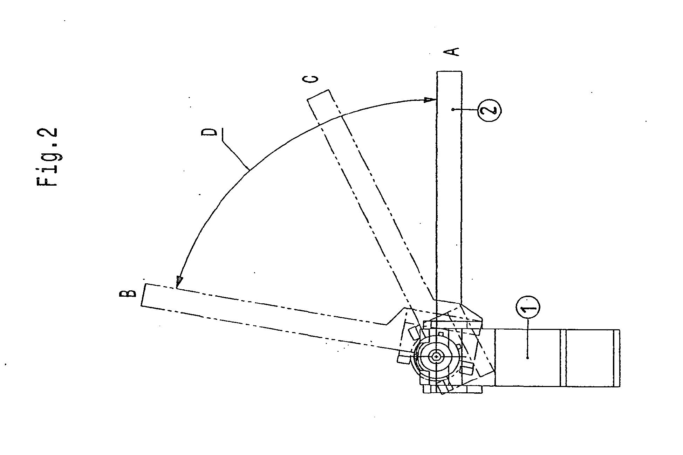

In Figur 1 ist eine erfindungsgemäße Armlehne in Schrägansicht gezeigt. In Figur 2 ist verdeutlicht, wie die Armlehne neigungsverstellbar ist. Sie besteht aus einer gestellfest anzuordnenden Stütze 1. Im Ausführungsbeispiel, wie beispielsweise aus Figur 1 ersichtlich, handelt es sich um zwei Stützarme, die gestellfest befestigt sind und an denen die Armlehne neigungsverstellbar gehalten ist. Dazu ist an der Stütze 1 ein Träger 2 drehbar gelagert. Der Träger 2 ist im Regelfall gepolstert und kann auch ein in Längsrichtung verschiebbares Teil zur Verlängerung der Armlehne aufweisen. Der Träger 2 ist an der Stütze 1 in unterschiedlichen Neigungsstellungen einstellbar angeordnet. Dazu kann der Träger 2 die Position A gemäß Figur 2 einnehmen, bei der es sich um die Grundstellung handelt. Aus der Grundstellung A kann der Träger 2 stufenlos in unterschiedliche Neigungsstellungen bis zur Neigungslage C eingestellt werden. Hierbei kann der Träger 2 in der Zeichnungsrichtung nach oben hochgeschwenkt werden. Aus der jeweiligen Zwischenstellung kann er aber nicht nach unten zurückgeschwenkt werden. Um den Träger 2 wieder in die Grundstellung A zurückschwenken zu können, ist es erforderlich, dass dieser zunächst in die hochgeschwenkte Nichtgebrauchslage B entsprechend dem Bewegungspfeil D verschwenkt wird. Nachfolgend kann dann der Träger 2 aus der Stellung B in die Stellung A zurückgeschwenkt werden.

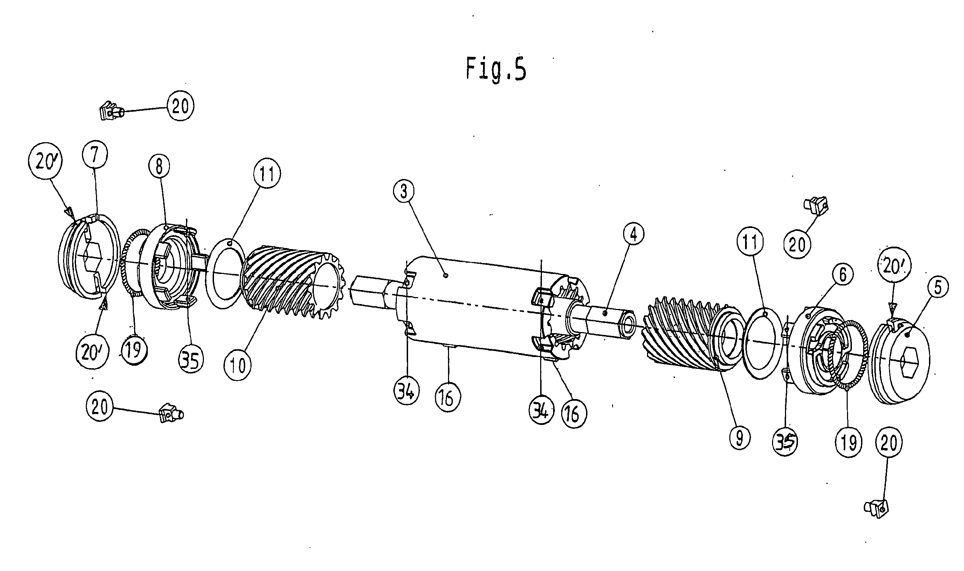

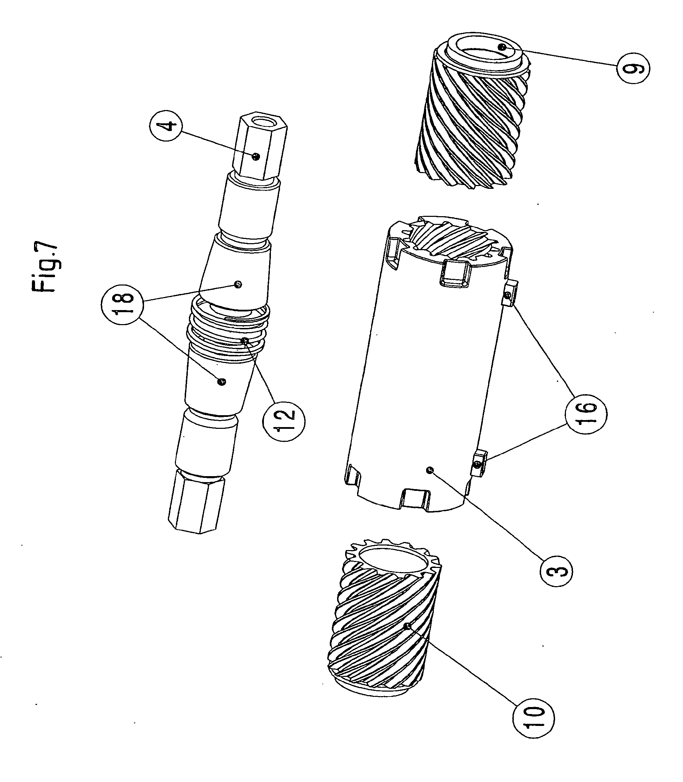

Wie besonders anschaulich aus den Figuren 5 bis 7 ersichtlich ist, besteht die Einrichtung zur Neigungseinstellung aus einer mit ihren Enden an der Stütze 1 drehfest befestigten Achse 4, die an ihren Enden polygonal ausgebildet ist, um eine entsprechende Fixierung zu erreichen, die gegen Drehen gesichert ist. Die Achse 4 weist in ihrem Mittelbereich zwei einander entgegengerichtet ausgerichtete Konen 18 auf, deren kleinster Durchmesser zu den Enden der Achse 4 gerichtet ist und deren größter Durchmesser zur Mitte der Achse 4 positioniert ist. Des Weiteren sind zwei mit passender Konusinnenmantelfläche ausgebildete, jeweils auf die Konen 18 aufgeschobene Zahnkränze 9,10 vorgesehen, die eine außenliegende Verzahnung aufweisen. Die Verzahnung ist an dem einen Zahnkranz nach Art eines Rechtsgewindes und an dem anderen Zahnkranz nach Art eines Linksgewindes ausgebildet. Ferner ist eine die Zahnkränze 9,10 übergreifende Hülse 3 vorgesehen, die eine zu der Verzahnung der Zahnkränze 9,10 passende innenliegende Verzahnung nach Art eines Rechts- beziehungsweise Linksgewindes aufweist. Diese Teile bilden quasi eine Ausbildung vergleichbar einem Spannschloss. Bei Drehung der Hülse 3 können die Zahnkränze 9,10 entweder nach axial innen in Richtung auf den Freiraum zwischen den Konen 18 verstellt werden oder aber bei gegensätzlicher Drehung der Hülse 3 nach axial außen verstellt werden. Der Träger 2 ist drehfest mit der Hülse 3 verbunden. Hierzu weist die Hülse im Ausführungsbeispiel Arretierungsrippen 16 auf, die nach außen vorstehen und die mit entsprechenden Befestigungselementen 28 am Träger 2 fixiert sind. Des Weiteren ist eine Steuereinrichtung zur Steuerung der Verschiebe-Dreh-Bewegung der Zahnkränze 9,10 in Abhängigkeit von der Schwenkbewegung und/oder der Position des Trägers 2 vorgesehen, wobei die Steuereinrichtung, die später noch im Einzelnen beschrieben wird, aus Funktionsteilen besteht, die jeweils auf den Enden der Achse 4 zwischen den Enden der Zahnkränze 9,10 und der außenliegenden Stütze 1 angeordnet sind.

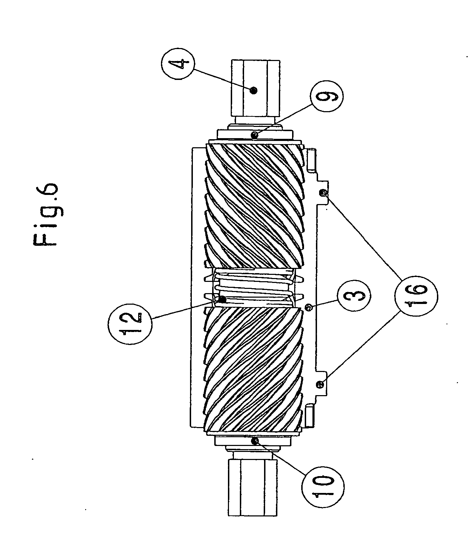

In der Sollposition, wie sie beispielsweise in Figur 6 verdeutlicht ist, ist jeder Zahnkranz 9,10 entgegen der Kraft einer mechanischen Feder 12 auf den zugehörigen Konus 18 der Achse 4 aufgeschoben. Im Ausführungsbeispiel ist die Anordnung so vorgesehen, dass zwischen den einander zugewandten Enden der Zahnkränze 9,10 eine mechanische Feder 12 in Form einer Schraubenfeder eingespannt ist, deren Wirkkraft der Aufschubbewegung der Zahnkränze 9,10 auf die zugehörigen Konen 18 entgegengerichtet ist. Sofern keine anderen Kräfte wirken, wird damit erreicht, dass bei Drehung der Hülse 3 durch Schwenkung des Trägers 2 aus Stellung A in Richtung Stellung B die Zahnkränze nach innen auf die Konen 18 aufgedrückt werden, jedoch durch die Kraft der Feder 12 wieder zurückgedreht werden, so dass eine lose Stellung erreicht ist.

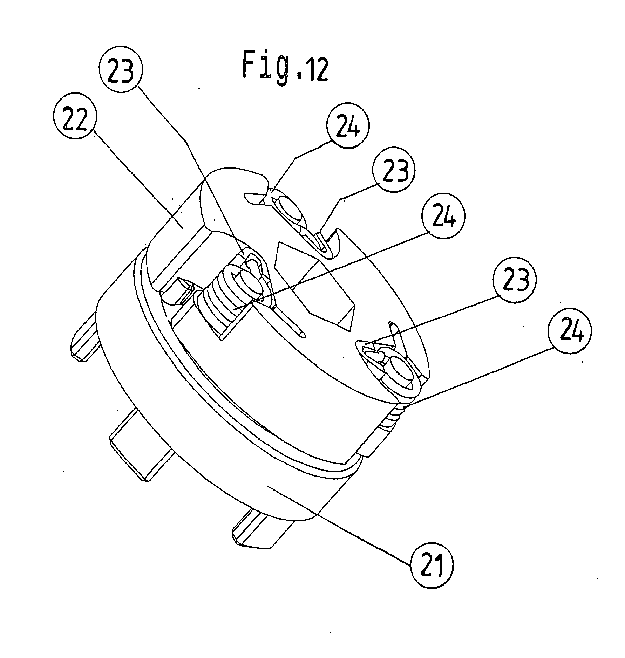

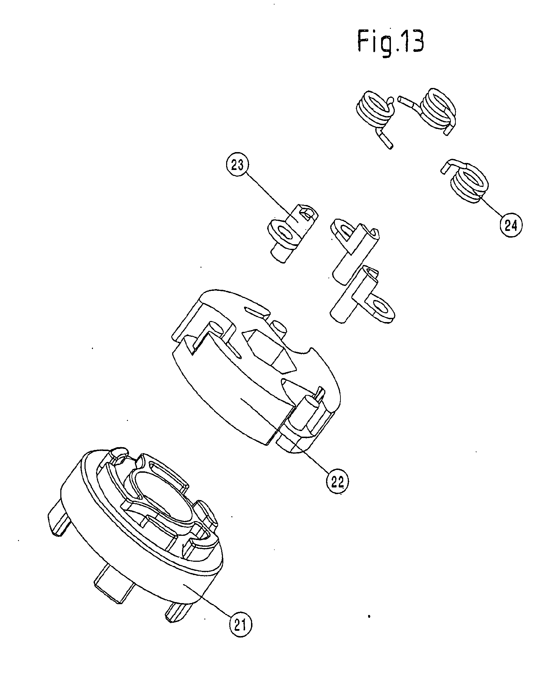

Wie beispielsweise aus Figur 5 ersichtlich, besteht die Steuereinrichtung jeweils aus einer drehfest auf das Ende der Achse 4 aufgesteckten Druckscheibe 5,7 oder 22, wie in Figur 12 und 13 gezeigt, wobei die Druckscheibe 5,7 beziehungsweise 22 in radialer Richtung bewegliche gefederte Steuerpins 20 beziehungsweise 23 aufweist. Die Steuerpins 20 sind mit ihrem Kopf in eine Aufnahme 20' der Druckscheibe 5 beziehungsweise 7 radial eingeschoben, so dass sie dort unverlierbar gehalten sind und axial nicht verstellbar sind. Lediglich in radialer Richtung ist eine Verstellung möglich. Diese Verstellung ist durch eine Federkraft bewirkt beziehungsweise gehemmt. Dazu ist eine Ringfeder 19 in eine umlaufende Nut der Druckscheibe 5 beziehungsweise 7 eingelegt, die auf die Kopfteile der Steuerpins 20 einwirkt und diese mit einer Kraft beaufschlagt, die die Steuerpins 20 nach radial innen bewegen will.

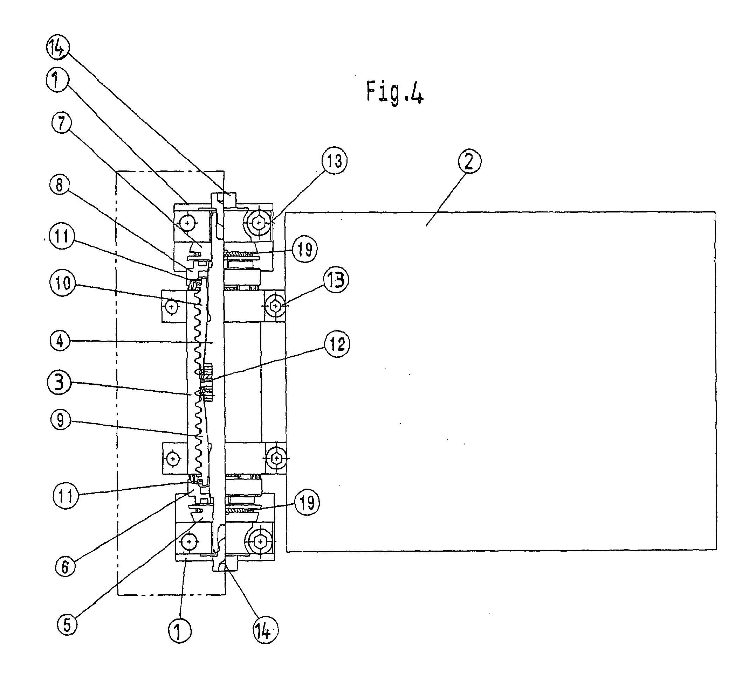

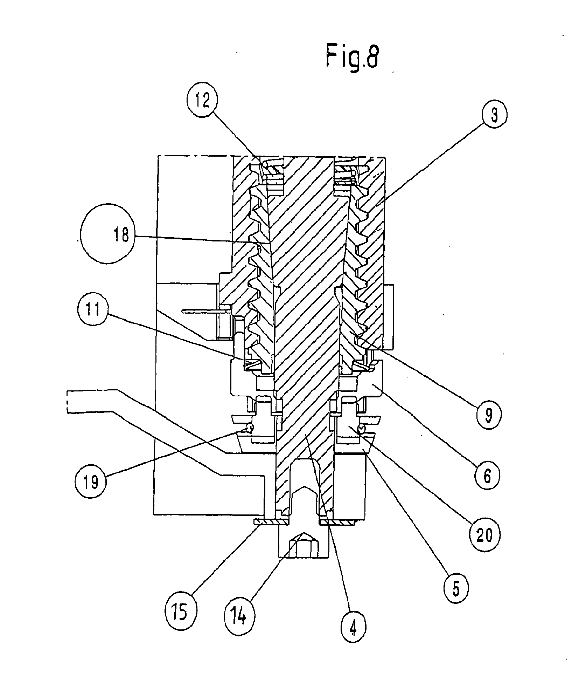

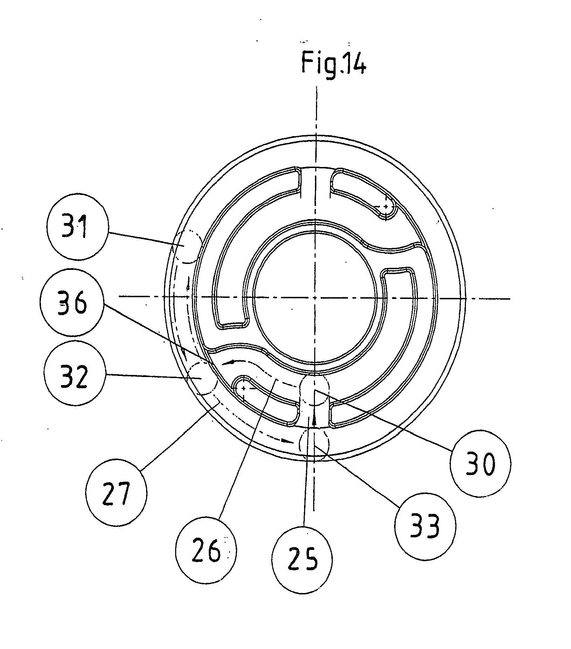

Bei der Ausführungsform nach Figur 12 und 13 sind die Steuerpins 23 jeweils in eine Ausnehmung der Druckscheibe 22 eingesetzt, wobei die Steuerpins mit einer Lasche über einen Bolzen der Druckscheibe 22 gesteckt sind, so dass sie um den Bolzen schwenken können und sich damit nach radial außen oder nach radial innen bewegen können. Auf die Bolzen sind zusätzlich Schenkelfedern 24 aufgesetzt, die sich an der Druckscheibe verhaken. Durch diese Schenkelfedern werden die Steuerpins 23 so vorgespannt gehalten, dass sie sich nach radial innen in die maximal innenliegende Stellung bewegen und aus dieser Stellung entgegen der Federkraft nach außen bewegt werden können. Die Druckscheibe 22,5,7 liegt in Montagesolllage jeweils an einer der Stützen 1 an, wie beispielsweise in Figur 8 ersichtlich ist. Zum Zwecke der drehfesten Verbindung der Druckscheibe 5,7,22 weist diese eine zum polygonalen Ende der Achse 4 passende polygonale Lochung auf. Ferner besteht die Steuereinrichtung aus einer mit der Hülse 3 drehfest gekoppelten, axial verschieblich auf der Achse 4 angeordneten Steuerscheibe 6,8,21 mit Steuerkurven, wie diese beispielsweise in Figur 14 veranschaulicht sind. In diese Steuerkurven greifen die freien Enden der Steuerpins 20,23 ein. Weiter ist ein mechanisches Federmittel 11 vorgesehen, welches zwischen der Steuerscheibe 6,8,21 und dem Ende des Zahnkranzes 9 beziehungsweise 10 angeordnet ist. Je nach Betriebsstellung ist diese Feder ungespannt, so dass sie keine axial gerichtete Kraft auf den jeweiligen Zahnkranz 9 beziehungsweise 10 ausübt oder aber sie ist in axialer Richtung vorgespannt, so dass sie eine axiale Kraft auf den jeweiligen Zahnkranz 9 beziehungsweise 10 ausübt. Der Spannungszustand ist von der Stellung der Steuerscheibe 6,8,21 abhängig. Vorzugsweise und im Ausführungsbeispiel ist das Federmittel 11 eine Tellerfeder. Die Hülse 3 weist stirnseitig an beiden Enden randoffene Ausnehmungen 34 auf, in die passende Fußvorsprünge 35 der Steuerscheibe 6,8,21 eingreifen. Dabei ist die axiale Erstreckung der Ausnehmungen 34 ausreichend groß, um die axiale Bewegung der Steuerscheibe 6,8,21, resultierend aus dem Zusammenwirken von Steuerpins 20,23 und Steuerscheibe 6,8, 21 zwängungsfrei zu ermöglichen. Insbesondere aus Figur 4 ist beispielsweise der Fall ersichtlich, dass zwei Steuerpins 20 einander diametral gegenüberliegend an der Druckscheibe 5 beziehungsweise 7 vorgesehen sind. Bei der Ausführungsform gemäß Figur 12 und 13, bei der drei Steuerpins 23 vorgesehen sind, sind die Konturen der Steuerscheibe 21 entsprechend geändert, wie in Figur 13 ersichtlich ist.

Die Steuerscheibe 6,8,21 weist aber jeweils auf ihrer den Steuerpins 20 beziehungsweise 23 zugewandten Fläche Steuerkurven auf, in denen die freien Enden der Steuerpins 20,23 geführt sind. Die Steuerpins 20,23 sind in einem ersten Abschnitt 31,32,27,33 der Steuerkurven so geführt, dass keine axiale Krafteinwirkung auf die Steuerscheibe 6,8,21 erreicht wird. Ferner sind sie in einem zweiten Abschnitt 30,26 derart geführt, dass die Kontaktfläche der Steuerkurve für die freien Enden der Steuerpins 20,23 derart ausgebildet ist, dass die Steuerscheibe 6,8, 21 entgegen der Kraft des Federmittels 11 in Richtung von der die Steuerpins 20,23 aufnehmenden Druckscheibe 5,7,22 weg bewegt wird. Hierzu weist der erste Abschnitt 31, 32, 27, 33 der Steuerkurven Stützflächen für die freien Enden der Steuerpins 20, 23 auf, die parallel zur Fläche der Steuerscheibe 6,8,21 und quer zur Achse 4 verlaufen. Der zweite Abschnitt 30, 26 der Steuerkurven weist eine Stützfläche auf, die über eine Einlaufschräge 25 von einem Bereich 33 des ersten Abschnittes abzweigt, über eine gegenüber den Stützflächen des ersten Abschnittes in Richtung auf die Druckscheibe 5,7,22 vorragende Stützfläche 26 weiterverläuft und über eine Stufe 36 in einen Bereich 32 des ersten Abschnittes 31,32,27,33 übergeht. Die Funktion ist wie folgt:

Im Schwenkbereich A bis C soll die Armlehne nach oben frei verstellbar und nach unten automatisch verriegelbar sein. Im Schwenkbereich von C bis B und von B bis A soll die Armlehne frei verstellbar sein.

Durch das Schwenken des Trägers 2 aus der Stellung A bis zur Stellung C werden die Zahnkränze 9, 10 durch die Hülse 3 unterstützt durch die Feder 12 nach außen durch die Gewindesteigung von den Konen 18 der Achse 4 gegen die Kraft der Feder 11 in die Losstellung gedrückt. Bei entgegengesetzter Bewegung des Trägers 2 in Richtung A laufen die Zahnkränze 9,10 über die Gewindesteigung und durch den Druck der Feder 11 auf die Konen 18 der Achse 4 auf und verriegeln die Bewegung in Richtung A.

In dem Bereich A bis C ist die Feder 11 über die Steuerpins 20 beziehungsweise 23 und die Steuerscheiben 6,8 beziehungsweise 21 mit der Kurvengeometrie gemäß Figur 14 unter Spannung gegen die Zahnkränze 9, 10 gedrückt. Bei Schwenkbewegung des Trägers 2 zwischen C und B sowie zwischen B und A sind die Steuerpins 20,23 auf der Kurvengeometrie der Steuerscheibe 6,8 beziehungsweise 21 so angeordnet, dass die Feder 11 drucklos ist, also keine Kräfte auf die Zahnkränze 9,10 ausübt. In der untersten Stellung A des Trägers 2 werden die Steuerpins 20, 23 durch den Druck der entsprechenden Ringfeder 19 oder Schenkelfedern 24 über die schräg anlaufende Kurvenbahn 25 in den Bereich 26 geführt, so dass die Steuerscheibe 6,8 beziehungsweise 21 die Feder 11 gegen den Zahnkranz 9 beziehungsweise 10 drückt.

Der Bewegungsablauf ist anhand des Ausführungsbeispieles nach Figur 14 gut nachvollziehbar. Dort ist durch gestrichelte Pfeile der Weg eines Steuerpins in der entsprechenden Kurvenbahn gezeigt. Bei Einstellung der untersten Schwenklage A befindet sich der Steuerpin in der Position 30. In diesem Bereich ist die Anlagefläche für den Steuerpin gegenüber der außen umlaufenden Fläche der Kurve 31,32,27 angehoben, so dass die Steuerscheibe 6 in Richtung der Feder 11 und diese in Richtung des Zahnkranzes 9 gedrückt wird. Beim weiteren Verstellen bis in die Stellung "C" bleibt der Steuerpin in diesem gegenüber dem übrigen Niveau der Führungskurven angehobenem Bereich. An der Position 36, die der Position entspricht, wenn der Träger 2 über die Position C nach oben weiter angehoben wird, verlässt der Steuerpin den angehobenen Bereich der Steuerkurven und springt über die Stufe 36 in den Bereich 32. In dieser Situation ist die Feder 11 drucklos, da die Steuerscheibe 6 sich in Richtung der Druckscheibe 5 verlagern kann und die Feder 11 nicht beaufschlagt ist. Aus dieser Position 32 kann beim weiteren Aufschwenken des Trägers 2 die Position B erreicht werden, was der Position 31 der Figur 14 entspricht. Wird nun der Träger 2 aus der Position B bis zur Position A abgesenkt, so läuft der Steuerpin in der durch eine Kante abgegrenzten Zone 31, 32, 27 bis kurz vor der Position 33. In diesem Bereich bleibt die Feder 11 drucklos, so dass die Bewegung nicht durch die Konen 18 beziehungsweise die Zahnkränze 9,10 gesperrt ist. Erst bei Erreichen der Position 33 kann durch die Federkraft der Steuerpin wieder in die Position 30 nach innen geführt werden. Es läuft dann das gleiche Schema ab, wie oben beschrieben.

Durch die erfindungsgemäße Ausbildung wird ein selbständiges Klemmen und Lösen bei der Drehbewegung über Konen auf der Achse erreicht, wobei die Betätigung über Zahnkränze mit Innenkonus und Zahnhülse erfolgt. Ein automatisches Lösen und Klemmen bei der Drehbewegung erfolgt über die Gewindesteigung/Verzahnung. Die Steuerung erfolgt über die Steuerscheibe mit Steuerstiften (Steuerpins).

Die Materialauswahl für die Einzelteile ist im Grunde beliebig. Vorzugsweise besteht die Achse aus Stahl oder Messing. Die Zahnkränze 9,10 bestehen vorzugsweise aus Stahl, Messing, Aluminium-Druckguss, Zink-Druckguss oder auch Kunststoff. Die Hülse 3 besteht wiederum vorzugsweise aus Stahl, Messing, Aluminium-Druckguss, Zink-Druckguss oder gegebenenfalls auch aus Kunststoff. Die Steuerscheiben 6,8, 21 bestehen vorzugsweise aus Aluminium-Druckguss, Zink-Druckguss oder Kunststoff. Aus den gleichen Materialien kann auch die Druckscheibe 5,7, 22 bestehen.

In der Zeichnung sind noch Schrauben 13,14 zur Befestigung der Elemente gezeigt sowie Unterlegscheiben 15. Mit 28 ist ein Haltebügel zur Befestigung des Trägers 2 an der Hülse 3 gezeigt. Mit 29 ist ein Haltebügel zur Befestigung der Achse 4 an der Stütze 1 gezeigt.

Die Erfindung ist nicht auf die Ausführungsbeispiele beschränkt, sondern im Rahmen der Offenbarung vielfach variabel.

## Patentansprüche

1. Neigungsverstellbare Armlehne, insbesondere für Kraftfahrzeuge, bestehend aus einer gestellfest anzuordnenden Stütze (1), einem an der Stütze (1) drehbar gelagerten Träger (2), der die Armlehne bildet oder an dem die Armlehne befestigt ist, und einer Einrichtung zur Einstellung der Neigung des Trägers (2) in eine abgeschwenkte Grundstellung (A), in eine hochgeschwenkte Nichtgebrauchslage (B), sowie stufenlos in Zwischengebrauchslagen zwischen der abgeschwenkten Grundstellung (A) und dieser gegenüber hochgeschwenkten Zwischen-Stützstellungen (C), wobei der Träger (2) in der Grundstellung (A) und in den Zwischengebrauchslagen (C) gegen ein Abschwenken blockiert ist und in der Nichtgebrauchslage (B) zum Abschwenken bis in die Grundstellung (A) freigegeben ist, **dadurch gekennzeichnet, dass** die Einrichtung zur Neigungseinstellung aus einer mit ihren Enden an der Stütze (1) befestigten Achse (4) mit zwei Konen (18) besteht, deren kleinster Durchmesser zu den Enden der Achse (4) und deren größter Durchmesser zur Mitte der Achse (4) positioniert ist, ferner aus zwei mit passender Konusinnenmantelfläche jeweils auf die Konen (18) aufgeschobenen Zahnkränzen (9,10) mit außenliegender Verzahnung nach Art eines Rechts- beziehungsweise Linksgewindes, einer die Zahnkränze(9,10) übergreifenden Hülse (3) mit zu den Zahnkränzen (9,10) passender, innenliegender Verzahnung nach Art eines Rechts- beziehungsweise Linksgewindes, wobei der Träger (2) drehfest mit der Hülse (3) oder dem Hülsenmantel verbunden ist, sowie einer Steuereinrichtung zur Steuerung der Verschiebe-Dreh-Bewegung der Zahnkränze (9,10) in Abhängigkeit von der Schwenkbewegung und/oder der Position des Trägers (2), wobei die Steuereinrichtung aus Funktionsteilen besteht, die jeweils auf den Enden der Achse (4) zwischen den Enden der Zahnkränze (9,10) und der Stütze (1) angeordnet sind.

2. Armlehne nach Anspruch 1, **dadurch gekennzeichnet, dass** jeder Zahnkranz (9,10) entgegen der Kraft einer mechanischen Feder (12) auf den zugehörigen Konus (18) aufgeschoben wird oder aufschiebbar ist.

3. Armlehne nach Anspruch 1, **dadurch gekennzeichnet, dass** zwischen den einander zugewandten Enden der Zahnkränze (9,10) eine mechanische Feder (12) eingespannt ist, deren Wirkkraft der Aufschubrichtung der Zahnkränze (9,10) auf die zugehörigen Konen (18) entgegengerichtet ist.

4. Armlehne nach Anspruch 1, **dadurch gekennzeichnet, dass** die Steuereinrichtung jeweils aus einer drehfest auf das Ende der Achse (4) aufgesteckten Druckscheibe (22,5,7) mit in radialer Richtung verschieblichen, gefederten Steuerpins (20,23), die an einer der Stützen (1) anliegt, einer mit der Hülse (3) drehfest gekoppelten, axial verschieblich auf der Achse (4) angeordneten Steuerscheibe (21,6,8) mit Steuerkurven, in die die Steuerpins (20,23) eingreifen, sowie einem mechanischen Federmittel (11) besteht, welches zwischen Steuerscheibe (21,6,8) und dem Ende des Zahnkranzes (9,10) vorspannbar angeordnet ist.

5. Armlehne nach Anspruch 4, **dadurch gekennzeichnet, dass** das Federmittel (11) eine Tellerfeder ist.

6. Armlehne nach Anspruch 4, **dadurch gekennzeichnet, dass** die Hülse (3) stirnseitig randoffene Ausnehmungen (34) aufweist, in die passende Fußvorsprünge (35) der Steuerscheibe (6,8,21) eingreifen, wobei die axiale Erstreckung der Ausnehmungen (34) groß genug ist, um die axiale Bewegung der Steuerscheibe (6,8,21), resultierend aus dem Zusammenwirken von Steuerpins (20,23) und Steuerscheibe (6,8,21) zwängungsfrei zu ermöglichen.

7. Armlehne nach einem der Ansprüche 4 bis 6, **dadurch gekennzeichnet, dass** die Steuerscheibe (6,8,21) auf ihrer den Steuerpins (20,23) zugewandten Fläche Steuerkurven aufweist, in denen die freien Ende der Steuerpins (20,23) geführt sind, und dass die Steuerpins (20,23) in einem ersten Abschnitt (31,32,27,33) der Steuerkurven ohne axiale Krafteinwirkung auf die Steuerscheibe (6,8,21) geführt sind und in einem zweiten Abschnitt (30,26) der Steuerkurven derart geführt sind und die Kontaktfläche der Steuerkurve für die freien Enden der Steuerpins (20,23) derart ausgebildet ist, dass die Steuerscheibe (6,8,21) entgegen der Kraft des Federmittels (11) in Richtung von der die Steuerpins (20,23) aufnehmenden Druckscheibe (5,7,22) weg bewegbar ist oder bewegt wird.

8. Armlehne nach Anspruch 7, **dadurch gekennzeichnet, dass** der erste Abschnitt (31,32,27,33) der Steuerkurven Stützflächen für die freien Enden der Steuerpins (20,23) aufweist, die parallel zur Fläche der Steuerscheibe (6,8,21) und quer zur Achse (4) verlaufen, und dass der zweite Abschnitt (30,26) der Steuerkurven eine Stützfläche aufweist, die über eine Einlaufschräge (25) von einem Bereich (33) des ersten Abschnittes abzweigt, über eine gegenüber den Stützflächen des ersten Abschnitts in Richtung auf die Druckscheibe (5,7,22) vorragende Stützfläche (26) weiter verläuft und über eine Stufe (36) in einen Bereich (32) des ersten Abschnitts (31,32,27,33) übergeht.

## Claims

1. A inclinable armrest, in particular for motor vehicles, consisting of a support (1) arranged in a manner fixed relative to the frame, a carrier (2) rotatably mounted at the support (1) and forming the armrest or being fixed at the armrest, and a device for adjusting the inclination of the carrier (2) into a pivoted-down basic position (A), into a pivoted-up position of non-use (B), and continuously into intermediate positions of use between the pivoted-down basic position (A) and intermediate positions of support (C) pivoted-up relative thereto, in the basic position (A) and in the intermediate positions of use (C), the carrier (2) being blocked against pivoting-down, and in the position of non-use (B), being enabled for pivoting-down into the basic position (A), **characterized in that** the device for adjusting the inclination comprises a shaft (4) fixed with its ends at the support (1) and having two cones (18), the smallest diameter of which is positioned toward the ends of the shaft (4) and the largest diameter of which is positioned toward the center of the shaft (4), further two sprockets (9, 10) with a matching inner cone surface slipped over the cones (18), respectively, and having an external toothing according to the type of a right-hand thread or a left-hand thread, respectively, a sleeve (3) extending over the sprockets (9, 10) and having an internal toothing matching with that of the sprockets (9, 10) according to the type of a right-hand thread or a left-hand thread, respectively, the carrier (2) being connected in a rotationally fixed manner with the sleeve (3) or the sleeve envelope, and a control device for controlling the translational-rotational movement of the sprockets (9, 10) in dependence on the pivoting movement and/or the position of the carrier (2), the control device being composed of functional parts that are respectively arranged on the ends of the shaft (4) between the ends of the sprockets (9, 10) and the support (1).

2. The armrest according to claim 1, **characterized in that** each sprocket (9, 10) is or can be slid onto the respective cone (18) against the force of a mechanical spring (12).

3. The armrest according to claim 1, **characterized in that** between the facing ends of the sprockets (9, 10), a mechanical spring (12) is constrained, the acting force of which is opposed to the slide-on direction of the sprockets (9, 10) onto the respective cones (18).

4. The armrest according to claim 1, **characterized in that** the control device respectively consists of a pressure disc (22, 5, 7) slid in a rotationally fixed manner onto the end of the shaft (4) with spring-loaded control pins (20, 23) being displaceable in a radial direction, said pressure disc resting against one of the supports (1), a control disc (21, 6, 8) being coupled in a rotationally fixed manner with the sleeve (3) and being axially displaceable on the shaft (4), and having control cams, into which the control pins (20, 23) engage, and a mechanical spring means (11) that is arranged between the control disc (21, 6, 8) and the end of the sprocket (9, 10) in a pretensionable manner.

5. The armrest according to claim 4, **characterized in that** the spring means (11) is a disc spring.

6. The armrest according to claim 4, **characterized in that** the sleeve (3) has open-ended recesses (34) at the front side, into which matching foot projections (35) of the control disc (6, 8, 21) engage, the axial extension of the recesses (34) being large enough to allow in an unconstrained manner the axial movement of the control disc (6, 8, 21) resulting from the combined action of control pins (20, 23) and control disc (6, 8, 21).

7. The armrest according to one of claims 4 to 6, **characterized in that** the control disc (6, 8, 21) has control cams on its face showing toward the control pins (20, 23), in which control cams the free ends of the control pins (20, 23) are guided, and that the control pins (20, 23) are guided in a first section (31, 32, 27, 33) of the control cams without an axial force on the control disc (6, 8, 21), and are guided in a second section (30, 26) of the control cams in such a manner and the contact surface of the control cam for the free ends of the control pins (20, 23) is configured in such a manner that the control disc (6, 8, 21) can be moved or is moved against the force of the spring means (11) in a direction away from the pressure disc (5, 7, 22) receiving the control pins (20, 23).

8. The armrest according to claim 7, **characterized in that** the first section (31, 32, 27, 33) of the control cams has support surfaces for the free ends of the control pins (20, 23) that extend in parallel to the surface of the control disc (6, 8, 21) and transversely to the shaft (4), and that the second section (30, 26) of the control cams has a support surface that extends via a lead-in chamfer (25) from a region (33) of the first section, further extends via a support surface (26) projecting from the support surfaces of the first section toward the pressure disc (5, 7, 22), and merges via a step (36) with a region (32) of the first section (31, 32, 27, 33).

## Revendications

1. Accoudoir réglable en inclinaison, en particulier pour véhicules à moteur, consistant en un support (1) arrangé de manière fixée au bâti, un plateau porteur (2) monté tournant au support (1) et formant l'accoudoir ou étant fixé à l'accoudoir, et un dispositif de réglage de l'inclinaison du plateau porteur (2) dans une position de base (A) basculée vers le bas, dans une position de non-utilisation (B) basculée vers le haut, et dans des positions d'utilisation intermédiaires basculées en continue vers le haut entre la position de base (A) vers le bas et des positions de support intermédiaires (C) par rapport à celle-ci, le plateau porteur (2) étant bloqué dans la position de base (A) et dans les positions d'utilisation intermédiaires (C) contre un basculement vers le bas, et dans la position de non-utilisation (B) a la possibilité de basculer vers le bas dans la position de base (A), **caractérisé en ce que** le dispositif de réglage de l'inclinaison consiste en un axe (4) fixé avec ses extrémités au support (1) et ayant deux cônes (18), dont le diamètre le plus faible est positionné vers les extrémités de l'axe (4) et dont le diamètre le plus grand est positionné vers le centre de l'axe (4), en outre en deux couronnes dentées (9, 10), qui sont poussées avec une surface intérieure conique adaptée de l'enveloppe respectivement sur les cônes (18) et qui ont une denture extérieure en forme d'un filet à droite ou à gauche, un manchon (3) s'étendant sur les couronnes dentées (9, 10) et ayant une denture intérieure adaptée aux couronnes dentées (9, 10) en forme d'un filet à droite ou à gauche, le plateau porteur (2) étant lié de manière non rotative au manchon (3) ou à l'enveloppe du manchon, et en un dispositif de commande du déplacement/de la rotation des couronnes dentées (9, 10) conformément au pivotement et/ou à la position du plateau porteur (2), le dispositif de commande consistant en des parties fonctionnelles, qui sont respectivement disposées sur les extrémités de l'axe (4) entre les extrémités des couronnes dentées (9, 10) et le support (1).

2. Accoudoir selon la revendication 1, **caractérisé en ce que** chaque couronne dentée (9, 10) est poussée ou peut être poussée contre la force d'un ressort (12) mécanique sur le cône (18) respectif.

3. Accoudoir selon la revendication 1, **caractérisé en ce qu'**entre les extrémités des couronnes dentées (9, 10) disposées en vis-à-vis un ressort (12) mécanique est inséré, dont la force d'action est dirigée en sens opposé à la force agissant dans la direction de poussée des couronnes dentées (9, 10) sur les cônes (18) respectifs.

4. Accoudoir selon la revendication 1, **caractérisé en ce que** le dispositif de commande consiste en un disque de poussée (22, 5, 7) installé de manière non rotative sur l'extrémité de l'axe (4) et ayant des tiges de commande (20, 23) sur ressort radialement déplaçables, ce disque de poussée étant en appui sur un des supports (1), un disque de commande (21, 6, 8) couplé avec le manchon (3) de manière non rotative et étant axialement déplaçable sur l'axe (4) et comprenant des cames de commande, dans lesquelles les tiges de commande (20, 23) s'engagent, et un moyen de ressort (11) mécanique, qui est disposé entre le disque de commande (21, 6, 8) et l'extrémité de la couronne dentée (9, 10) de manière à pouvoir être précontrainte.

5. Accoudoir selon la revendication 4, **caractérisé en ce que** le moyen de ressort (11) est une rondelle-ressort.

6. Accoudoir selon la revendication 4, **caractérisé en ce que** le manchon (3) comprend sur la face frontale des évidements (34) ouverts sur un bord, des saillies inférieures (35) adaptées du disque de commande (6, 8, 21) engageant ceux-ci, l'étendue axiale des évidements (34) étant suffisamment grande pour permettre le mouvement axial du disque de commande (6, 8, 21) de manière non forcée comme résultat de l'action commune des tiges de commande (20, 23) et du disque de commande (6, 8, 21).

7. Accoudoir selon une des revendications 4 à 6, **caractérisé en ce que** le disque de commande (6, 8, 21) comprend sur la face dirigée vers les tiges de commande (20, 23) des cames de commande, dans lesquelles les extrémités libres des tiges de commande (20, 23) sont guidées, et que les tiges de commande (20, 23) sont guidées dans une première section (31, 32, 27, 33) des cames de commande sans application de force axiale sur le disque de commande (6, 8, 21) et sont guidées dans une deuxième section (30, 26) des cames de commande d'une telle façon et que la face de contact des cames de commande pour les extrémités libres des tiges de commande (20, 23) est configurée d'une telle façon, que le disque de commande (6, 8, 21) soit déplacé ou puisse être déplacé contre la force du moyen de ressort (11) dans la direction loin du disque de poussée (5, 7, 22) recevant les tiges de commande (20, 23).

8. Accoudoir selon la revendication 7, **caractérisé en ce que** la première section (31, 32, 27, 33) des cames de commande comprend des faces de support pour les extrémités libres des tiges de commande (20, 23), qui s'étendent en parallèle à la surface du disque de commande (6, 8, 21) et transversalement à l'axe (4), et que la deuxième section (30, 26) des cames de commande comprend une face de support, qui s'étend par l'intermédiaire d'un biseau d'entrée (25) à partir d'une région (33) de la première section, continue par l'intermédiaire d'une face de support (26) étant en saillie par rapport aux faces de support de la première section dans la direction vers le disque de poussée (5, 7, 22) et s'intègre par l'intermédiaire d'un palier (36) dans une région (32) de la première section (31, 32, 27, 33).
